# EUROPÄISCHE PATENTSCHRIFT

(11) **EP 1 708 963 B1**
(45) Veröffentlichungstag und Bekanntmachung des Hinweises auf die Patenterteilung: **31.10.2007**
(21) Anmeldenummer: 04803902.8
(22) Anmeldetag: 15.12.2004
(51) Int. Cl.: C01B 13/14, B22F 1/00

(54) **NANOPARTIKEL**
NANOPARTICLES
NANOPARTICULES

(30) Priorität: 27.01.2004 DE 102004004210; 28.09.2004 EP 04023003
(43) Veröffentlichungstag der Anmeldung: 11.10.2006
(73) Patentinhaber: Merck Patent GmbH, 64293 Darmstadt (DE)
(72) Erfinder: KOCH, Matthias, 65183 Wiesbaden (DE); KHRENOV, Victor, 60323 Mainz (DE); KLAPPER, Markus, 55128 Mainz (DE); MUELLEN, Klaus, 50939 Köln (DE)
(86) Internationale Anmeldenummer: PCT/EP2004/014283
(87) Internationale Veröffentlichungsnummer: WO 2005/070820

(56) Entgegenhaltungen:
- EP-A- 1 134 302
- WO-A-02/42201
- WO-A-02/087749
- US-A1- 2002 110 519

## Beschreibung

Die Erfindung betrifft polymermodifizierte Nanopartikel, ein Herstellverfahren für solche Partikel sowie ihre Verwendung zum UV Schutz in Polymeren.

Das Einarbeiten anorganischer Nanopartikel in eine Polymermatrix kann nicht nur die mechanischen Eigenschaften, wie z. B. Schlagzähigkeit, der Matrix beeinflussen, sondern verändert auch ihre optischen Eigenschaften, wie z.B. wellenlängen-abhängige Transmission, Farbe (Absorptionsspektrum) und Brechzahl. In Mischungen für optische Anwendungen spielt die Teilchengröße eine wichtige Rolle, da die Zugabe eines Stoffes mit einer Brechzahl, die von der Brechzahl der Matrix abweicht, zwangsläufig zu Lichtstreuung und letztlich zu Lichtundurchlässigkeit führt. Dabei zeigt die Abnahme der Intensität von Strahlung einer definierten Wellenlänge beim Durchtritt durch ein Gemisch eine starke Abhängigkeit vom Durchmesser der anorganischen Partikel.

Zusätzlich sind sehr viele Polymere empfindlich gegen UV-Strahlung, so dass die Polymere für die praktische Anwendung UV-stabilisiert sein müssen. Viele organische UV-Filter, die hier prinzipiell als Stabilisatoren geeignet wären, sind leider selbst nicht photostabil, so dass für langfristige Anwendungen nach wie vor Bedarf nach geeigneten Materialien besteht.

Geeignete Substanzen müssten folglich im UV-Bereich absorbieren, im sichtbaren Bereich möglichst transparent erscheinen und sich gut in Polymere einarbeiten lassen. Zahlreiche Metalloxide absorbieren zwar UV-Licht, lassen sich aus den oben genannten Gründen jedoch nur schlecht ohne Beeinträchtigung der mechanischen bzw. der optischen Eigenschaften im Bereich des sichtbaren Lichtes in Polymere einarbeiten.

Die Entwicklung geeigneter Nanomaterialien zur Dispersion in Polymeren erfordert nicht nur die Kontrolle der Teilchengröße, sondern auch der Oberflächeneigenschaften der Teilchen. Ein einfaches Vermischen (z.B. durch Extrusion) von hydrophilen Partikeln mit einer hydrophoben Polymermatrix führt zu einer ungleichmäßigen Verteilung der Partikel im gesamten Polymer und zudem zu ihrer Aggregation. Für das homogene Einarbeiten anorganischer Partikel in Polymere muss deren Oberfläche daher zumindest hydrophob verändert sein. Zusätzlich zeigen insbesondere die nanopartikulären Materialen eine große Tendenz Agglomerate zu bilden, die auch bei einer nachträglichen Oberflächenbehandung bestehen bleiben.

Überraschend wurde jetzt gefunden, dass es gelingt Nanopartikel direkt mit einer geeigneten Oberflächenmodifikation nahezu agglomeratfrei aus Emulsionen zu fällen, wenn als Emulgator bestimmte statistische Copolymere eingesetzt werden.

Besonders vorteilhaft sind die so erhaltenen Partikel hinsichtlich der Einarbeitung in hydrophobe Polymere, da sich die Partikel durch einfache Maßnahmen homogen im Polymer verteilen lassen und im sichtbaren Bereich kaum Strahlung absorbieren.

Ein erster Gegenstand der vorliegenden Erfindung sind daher polymermodifizierte Nanopartikel geeignet als UV-Stabilisatoren in Polymeren, dadurch gekennzeichnet, dass sie erhältlich sind durch ein Verfahren, bei dem in einem Schritt a) eine inverse Emulsion, enthaltend einen oder mehrere wasserlösliche Precursoren für die Nanopartikel oder eine Schmelze, mit Hilfe eines statistischen Copolymeren aus mindestens einem Monomer mit hydrophoben Resten und mindestens einem Monomer mit hydrophilen Resten hergestellt wird und in einem Schritt b) Partikel erzeugt werden.

Ein weiterer Gegenstand der vorliegenden Erfindung ist ein Verfahren zur Herstellung polymermodifizierter Nanopartikel, das dadurch gekennzeichnet ist, dass in einem Schritt a) eine inverse Emulsion, enthaltend einen oder mehrere wasserlösliche Precursoren für die Nanopartikel oder eine Schmelze, mit Hilfe eines statistischen Copolymeren aus mindestens einem Monomer mit hydrophoben Resten und mindestens einem Monomer mit hydrophilen Resten hergestellt wird und in einem Schritt b) Partikel erzeugt werden.

Die Emulsionstechnik zur Erzeugung von Nanopartikeln ist im Prinzip bekannt. So beschreibt M. P. Pileni; J. Phys. Chem. 1993, 97, 6961-6973 die Herstellung von Halbleiterpartikeln, wie CdSe, CdTe und ZnS in inversen Emulsionen.

Allerdings erfordern die Synthesen der anorganischen Materialien oft hohe Salzkonzentrationen an Precursormaterialien in der Emulsion, wobei die Konzentration zusätzlich während der Reaktion schwankt. Niedermolekulare Tenside reagieren auf solch hohe Salzkonzentrationen, so dass die Stabilität der Emulsionen gefährdet ist (Paul Kent and Brian R. Saunders; Journal of Colloid and Interface Science 242, 437-442 (2001)). Insbesondere die Steuerung der Partikelgrößen gelingt nur noch bedingt (M.-H. Lee, C. Y. Tai, C. H. Lu, Korean J. Chem. Eng. 16, 1999, 818-822).

K. Landfester (Adv. Mater. 2001, 13, No. 10, 765- 768) schlägt die Verwendung von hochmolekularen Tensiden (PEO-PS-Blockcopolymere) in Kombination mit Ultraschall zur Erzeugung von Nanopartikeln im Teilchengrößenbereich von etwa 150 bis etwa 300 nm aus Metallsalzen vor.

Durch die Auswahl von statistischen Copolymeren aus mindestens einem Monomer mit hydrophoben Resten und mindestens einem Monomer mit hydrophilen Resten ist es jetzt gelungen Emulgatoren zu Verfügung zu stellen, welche die Herstellung von anorganischen Nanopartikeln aus inversen Emulsionen unter Kontrolle der Teilchengröße und Teilchengrößenverteilung ermöglichen. Gleichzeitig gelingt es durch die Verwendung dieser neuen Emulgatoren die Nanopartikel nahezu Agglomerat-frei aus den Dispersionen zu isolieren, da die individuellen Partikel sich unmittelbar Polymer-beschichtet bilden. Darüberhinaus lassen sich die mit dieser Methode erhältlichen Nanopartikel besonders einfach und gleichmäßig in Polymeren dispergieren, wobei insbesondere eine unerwünschte Beeinträchtigung der Transparenz solcher Polymere im sichtbaren Licht weitgehend vermieden werden kann.

Die erfindungsgemäß einzusetzenden statistischen Copolymere zeigen dabei ein Gewichtsverhältnis von Struktureinheiten mit hydrophoben Resten zu Struktureinheiten mit hydrophilen Resten in den statistischen Copolymeren das im Bereich 1:2 bis 500:1, vorzugsweise im Bereich 1:1 bis 100:1 und insbesondere bevorzugt im Bereich 7:3 bis 10:9 liegt. Das gewichtsmittlere Molgewicht der statistischen Copolymere liegt im Bereich von M_{w} = 1000 bis 1 000 000 g/mol, vorzugsweise im Bereich von 1 500 bis 100 000 g/mol und insbesondere bevorzugt im Bereich 2 000 bis 40 000 g/mol.

Es hat sich dabei gezeigt, dass insbesondere Copolymere, welche der Formel I entsprechen, wobei 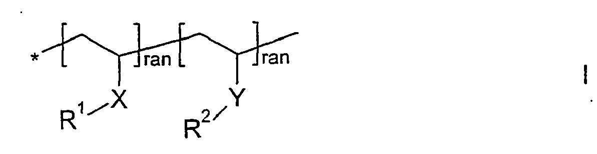
X und Y den Resten üblicher nichtionischer oder ionischer Monomere entsprechen und
R¹ steht für Wasserstoff oder eine hydrophobe Seitengruppe, vorzugsweise ausgewählt aus den verzweigten oder unverzweigten Alkylresten mit mindestens 4 Kohlenstoffatomen bei denen ein oder mehrere, vorzugsweise alle H-Atome durch Fluor-Atome ersetzt sein können,und
R² steht für eine hydrophile Seitengruppe, die vorzugsweise einen Phosphonat- , Sulfonat-, Polyol- oder Polyether-Rest aufweist,
und wobei innerhalb eines Moleküls -X-R¹ und -Y-R² jeweils mehrere verschiedene Bedeutungen haben können, die erfindungsgemäßen Anforderungen in besonderer Weise erfüllen.

Insbesondere bevorzugt sind erfindungsgemäß solche Polymere, bei denen -Y-R² steht für eine Betainstruktur.

Dabei sind solche Polymere gemäß Formel I wiederum besonders bevorzugt, bei denen X und Y unabhängig voneinander stehen für-O-, -C(=O)-O-, -C(=O)-NH-, -(CH₂)ₙ-, Phenylen oder Pyridiyl. Weiter lassen sich Polymere bei denen mindestens eine Struktureinheit mindestens ein quarternäres Stickstoffatom enthält, wobei R² vorzugsweise steht für eine Seitengruppe -(CH₂)ₘ-(N⁺(CH₃)₂)-(CH₂)ₙ-SO₃⁻ oder eine Seitengruppe -(CH₂)ₘ-(N⁺(CH₃)₂)-(CH₂)ₙ-PO₃²⁻, wobei m steht für eine ganze Zahl aus dem Bereich von 1 bis 30, vorzugsweise aus dem Bereich 1 bis 6, insbesondere bevorzugt 2, und n steht für eine ganze Zahl aus dem Bereich von 1 bis 30, vorzugsweise aus dem Bereich 1 bis 8, insbesondere bevorzugt 3, vorteilhaft einsetzen.

Insbesondere bevorzugt einzusetzende statistische Copolymere lassen sich dabei nach folgendem Schema herstellen:

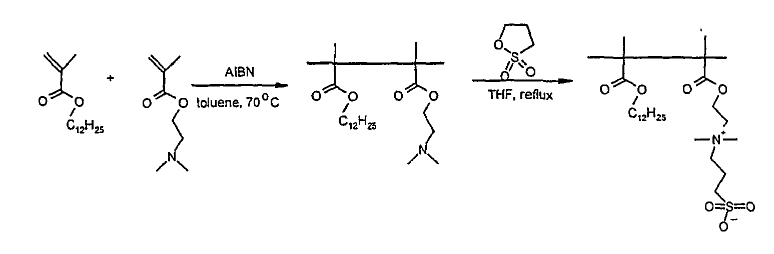

Dabei werden die gewünschten Mengen von Laurylmethacrylat (LMA) und Dimethylaminoethylmethacrylat (DMAEMA) nach bekannten Verfahren, vorzugsweise in Toluol radikalisch durch AIBN-Zusatz copolymerisiert. Anschließend wird eine Betainstruktur durch Umsetzung des Amins mit 1,3-Propansulton nach bekannten Methoden erhalten.

Alternative bevorzugt einzusetzende Copolymere können Styrol, Vinylpyrrolidon, Vinylpyridin, halogeniertes Styrol oder Methoxystyrol enthalten, wobei diese Beispiele keine Einschränkung darstellen. In einer anderen ebenfalls bevorzugten Ausführungsform der vorliegenden Erfindung werden Polymere verwendet, die dadurch gekennzeichnet sind, dass mindestens eine Struktureinheit ein Oligo- oder Polymer, vorzugsweise ein Makromonomer ist, wobei Polyether, Polyolefine und Polyacrylate als Makromonomere insbesondere bevorzugt sind.

Als Precursoren für die anorganischen Nanopartikel lassen sich wasserlösliche Metall-Verbindungen, vorzugsweise Silicium-, Cer-, Cobalt-, Chrom-, Nickel-, Zink-, Titan-, Eisen-, Yttrium- und / oder Zirconium-Verbindungen einsetzen, wobei diese Precursoren vorzugsweise zur Herstellung entsprechender Metalloxid-Partikel vorzugsweise mit einer Säure oder Lauge umgesetzt werden. Dabei können Mischoxide in einfacher Weise durch geeignete Mischung der entsprechenden Precursoren erhalten werden. Die Auswahl geeigneter Precursoren bereitet dem Fachmann dabei keine Schwierigkeiten, es sind alle Verbindungen geeignet, die sich zur Fällung der entsprechenden Zielverbindungen aus wässriger Lösung eignen. Eine Übersicht geeigneter Precursoren zur Herstellungen von Oxiden ist beispielsweise in Tabelle 6 in K.Osseo-Asare "Microemulsion-mediated Synthesis of nanosize Oxide Materials" in: Kumar P., Mittal KL, (editors), Handbook of microemulsion science and technology, New York: Marcel Dekker, Inc., pp. 559-573 gegeben.

Hydrophile Schmelzen können ebenfalls als Precursoren für Nanopartikel im Sinne dieser Erfindung dienen. Eine chemische Umsetzung zur Erzeugung der Nanopartikel ist in diesem Fall nicht zwingend erforderlich.

Bevorzugt hergestellte Nanopartikel sind solche, die im wesentlichen aus Oxiden bzw. Hydroxiden von Silicium-, Cer-, Cobalt-, Chrom-, Nickel-, Zink-, Titan-, Eisen-, Yttrium- und / oder Zirconium bestehen.

Vorzugsweise weisen die Partikel eine mittlere Teilchengröße bestimmt mittels eines Malvern ZETASIZER (dynamischer Lichtstreuung) bzw. Transmisionselektronenmikroskop von 3 bis 200 nm, insbesondere von 20 bis 80 nm und ganz besonders bevorzugt von 30 bis 50 nm auf. In speziellen ebenfalls bevorzugten Ausführungsformen der vorliegenden Erfindung ist die Verteilung der Teilchengrößen eng, d.h. die Schwankungsbreite beträgt weniger als 100 % des Mittelwertes, insbesondere bevorzugt maximal 50 % des Mittelwertes.

Im Sinne der Verwendung dieser Nanopartikel zum UV-Schutz in Polymeren ist es insbesondere bevorzugt, wenn die Nanopartikel ein Absorptionsmaximum im Bereich 300 - 500 nm, vorzugsweise im Bereich bis 400 nm aufweisen, wobei besonders bevorzugte Nanopartikel insbesondere im UV-A-Bereich Strahlung absorbieren.

Die Durchführung der Emulsionsverfahrens kann dabei auf verschiedenen Wegen erfolgen:

Wie bereits ausgeführt erfolgt die Erzeugung von Partikeln im Schritt b) üblicherweise durch Umsetzung der Precursoren oder durch Abkühlen der Schmelze. Dabei können die Precursoren je nach gewählter Verfahrensvariante mit einer Säure, einer Lauge, einem Reduktions- oder Oxidationsmittel umgesetzt werden.

Zur Erzeugung von Partikeln im gewünschten Teilchengrößenbereich ist es insbesondere vorteilhaft, wenn die Tröpfchengröße in der Emulsion im Bereich von 5 bis 500 nm, vorzugsweise im Bereich von 10 bis 200 nm liegt. Die Einstellung der Tröpfchengröße im gegebenen System erfolgt dabei in der dem Fachmann bekannten Weise, wobei die Ölphase vom Fachmann individuell auf das Reaktionssystem abgestimmt wird. Für die Herstellung von ZnO-Partikeln haben sich beispielsweise Toluol und Cyclohexan als Ölphase bewährt.

In bestimmten Fällen kann es dabei hilfreich sein, wenn neben dem statistischen Copolymeren ein weiterer Coemulgator, vorzugsweise ein nicht-ionisches Tensid eingesetzt wird. Bevorzugte Coemulgatoren sind gegebenenfalls ethoxylierte oder propoxylierte, längerkettige Alkanole oder Alkylphenole mit unterschiedlichen Ethoxylierungs- bzw. Propoxylierungsgraden (z. B. Addukte mit 0 bis 50 mol Alkylenoxid).

Auch Dispergierhilfsmittel können vorteilhaft eingesetzt werden, wobei vorzugsweise wasserlösliche hochmolekulare organische Verbindungen mit polaren Gruppen, wie Polyvinylpyrrolidon, Copolymerisate aus Vinylpropionat oder -acetat und Vinylpyrrolidon, teilverseifte Copolymeriste aus einem Acrylester und Acrylnitril, Polyvinylalkohole mit unterschiedlichem Restacetat-Gehalt, Zelluloseether, Gelatine, Blockcopolymere, modifizierte Stärke, niedermolekulare, carbon- und/oder sulfonsäuregruppenhaltigen Polymerisate oder Mischungen dieser Stoffe verwendet werden.

Besonders bevorzugte Schutzkolloide sind Polyvinylalkohole mit einem Restacetat-Gehalt von unter 40, insbesondere 5 bis 39 Mol.-% und/oder Vinylpyrrolidon-Ninylpropionat-Copolymere mit einem Vinylestergehalt von unter 35, insbesondere 5 bis 30 Gew.-%.

Durch die Einstellung der Reaktionsbedingungen, wie Temperatur, Druck, Reaktionsdauer lassen sich gezielt die gewünschten Eigenschaftskombinationen der benötigten Nanopartikel einstellen. Die entsprechende Einstellung dieser Parameter bereitet dem Fachmann keinerlei Schwierigkeiten. Beispielsweise kann für viele Zwecke bei Normaldruck und Raumtemperatur gearbeitet werden.

In einer bevorzugten Verfahrensvariante wird im Schritt b) eine zweite Emulsion, in der ein Reaktionspartner für die Precursoren emulgiert vorliegt, mit der Precursor-Emulsion aus Schritt a) vermischt. Dieses 2-Emulsions-Verfahren erlaubt die Herstellung von Partikeln mit besonders enger Partikelgrößenverteilung. Dabei kann es insbesondere vorteilhaft sein, wenn die beiden Emulsionen durch Ultraschalleinwirkung miteinander vermischt werden.

In einer anderen, ebenfalls bevorzugten Verfahrensvariante wird die Precursor-Emulsion in Schritt b) mit einem Fällungsmittel versetzt, dass in der kontinuierlichen Phase der Emulsion löslich ist. Die Fällung erfolgt dann durch Diffundieren des Fällungsmittels in die Precursor-enthaltenden Micellen. Beispielsweise können so Titandioxid-Partikel erhalten werden durch Diffundieren von Pyridin in Titanylchlorid-enthaltende Micellen bzw. Silber-Partikel durch Diffundieren von langkettigen Aldehyden in Silbernitrat-enthaltende Micellen.

Die erfindungsgemäßen Nanopartikel werden insbesondere zum UV-Schutz in Polymeren verwendet. Dabei Schützen die Partikel entweder die Polymere selbst vor Abbau durch UV-Strahlung, oder die Polymerzubereitung enthaltend die Nanopartikel wird - beispielsweise in Form einer Schutzfolie - wiederum als UV-Schutz für andere Materialien eingesetzt. Die entsprechende Verwendung von erfindungsgemäßen Nanopartikeln zur UV-Stabilisierung von Polymeren und UV-stabilisierte Polymerzubereitungen im wesentlichen bestehend aus mindestens einem Polymeren, die dadurch gekennzeichnet sind, dass das Polymere erfindungsgemäße Nanopartikel enthält, sind daher weitere Gegenstände der vorliegenden Erfindung. Polymere in welche die erfindungsgemäßen Nanopartikel gut eingearbeitet werden können sind dabei insbesondere Polycarbonat (PC), Polyethylenterephthalat (PETP), Polyimid (PI), Polystyrol (PS), Polymethylmethacrylat (PMMA) oder Copolymere, die mindestens einen Anteil eines der genannten Polymere enthalten.

Die Einarbeitung kann dabei durch übliche Methoden zur Herstellung von Polymerzubereitungen erfolgen. Beispielsweise kann das Polymermaterial mit erfindungsgemäßen Nanopartikeln, vorzugsweise in einem Extruder oder Kneter, vermischt werden. Je nach verwendetem Polymer können auch Kneter eingesetzt werden.

Ein besonderer Vorzug der erfindungsgemäßen Partikel besteht dabei darin, dass zur homogenen Verteilung der Partikel in dem Polymer nur ein im Vergleich zu dem Stand der Technik geringer Energieeintrag erforderlich ist.

Dabei kann es sich bei den Polymeren auch um Dispersionen von Polymeren, wie beispielsweise Lacke handeln. Hier kann die Einarbeitung durch übliche Mischvorgänge erfolgen.

Weiter eignen sich die erfindungsgemäßen Polymerzubereitungen enthaltend die Nanopartikel insbesondere auch zur Beschichtung von Oberflächen. Damit lässt sich die Oberfläche bzw. das unter der Beschichtung liegende Material beispielsweise vor UV-Strahlung schützen.

Die nachfolgenden Beispiele sollen die Erfindung näher erläutern.

### Beispiele

### Beispiel 1: Synthese der Makrotenside.

Der erste Schritt beinhaltet die Synthese eines statistischen Copolymers aus Dodecyl Methacrylat (Laurylmethacrylat; LMA) und Dimethylaminoethylmethacrylat (DMAEMA). Die Kontrolle des Molekulargewichts kann erreicht werden durch Zugabe von Mercaptoethanol. Das so erhaltene Copolymer wird mit 1,3-Propanesultone modifiziert, um gesättigte Gruppen zuzuführen.

Dazu werden 7 g LMA und DMAEMA, in einer Menge entsprechend unten stehender Tabelle 1, in 12 g Toluol vorgelegt und unter Argon bei 70°C nach Reaktionsstart durch Zugabe von 0,033 g AIBN in 1 mL Toluol radikalisch polymerisiert. Dabei kann das Kettenwachstum durch Zugabe von 2-Mercaptoethanol gesteuert werden (s. Tabelle 1). Das Rohpolymer wird gewaschen, gefriergetrocknet und anschließend mit 1,3-Propansulton, wie in V. Butun, C. E. Bennett, M. Vamvakaki, A. B. Lowe, N. C. Billingham, S. P. Armes, J. Mater. Chem., 1997, 7(9), 1693-1695 beschrieben, umgesetzt.

Die Charakterisierung der resultierenden Polymere findet sich in Tabelle 1.

**Tabelle 1: Eingesetzte Mengen an Monomeren und Charakterisierung der erhaltenen Polymere**

| | DMAEMA [g] | DMAEMA im Polymer [mol-%] | 1-Mercapto ethanol [g] | Mₙ [g/mol] | M_{w} [g/mol] | Betain-Gruppen [mol-%] |
|---|---|---|---|---|---|---|
| E1 | 1,08 | 19 | 0,033 | 18000 | 31000 | 16 |
| E2 | 1,08 | 19 | 0,011 | 28000 | 51000 | 19 |
| E3 | 1,08 | 21 | 0,066 | 13000 | 21000 | 21 |
| E4 | 1,09 | 20 | --- | 59000 | 158000 | 14,6 |
| E5 | 0,48 | 10,7 | --- | 52000 | 162000 | 7,5 |

### Beispiel 2: Fällung von ZnO-Partiketn

Die Fällung von ZnO-Partikeln erfolgt nach folgender Methode:
1. Herstellung jeweils einer inversen Emulsion einer wässrigen Lösung von 0,4g Zn(AcO)₂*2H₂O in 1,1g Wasser (Emulsion 1)und 0,15g NaOH in 1,35g Wasser (Emulsion 2) mittels Ultraschall. Emulsion 1 und Emulsion 2 enthalten jeweils 150 mg eines statistischen Copolymeren E1 - E5 aus Tabelle 1.
2. Ultraschallbehandlung des Gemisches aus Emulsion 1 und Emulsion 2 und anschließende Trocknung.
3. Reinigung von Natriumacetat durch Waschen des erhaltenen Feststoffes mit Wasser.
4. Trocknung und Wiederdispergierung des durch den Emulgator an der Oberfläche funktionalisierten Pulvers durch Rühren in Toluol.

FT-IR Spektroskopie und Röntgenbeugung weisen die Entstehung von ZnO nach. Weiterhin sind im Röntgendiagramm keine Reflexe von Natriumacetat sichtbar.

Somit führt Beispiel 2 zu einem Produkt, das aus dem synthetisierten Makrotensid und Zinkoxidpartikeln besteht.

| Copolymer | Durchmesser [nm] | Varianz [nm] | Anteil ZnO (w%) |
|---|---|---|---|
| | (Lichtstreuung) | | |
| E1 | 37 | 30 | 30,3 |
| E2 | 66 | 53 | 30,5 |
| E3 | 50 | 41 | 32 |

### Vergleichsbeispiel 2a: Verwendung des Emulgators ABIL EM 90^{®}

Die Durchführung gemäß Beispiel 2 mit den kommerziell erhältlichen Emulgator ABIL EM 90^{®} (Cetyl Dimethicone Copolyol, Fa. Goldschmidt) anstelle des statischen Copolymeren aus Beispiel 1 führt nicht zu einer stabilen Emulsion. Die erhaltenen Teilchen zeigen Durchmesser zwischen 500 und 4000 nm.

### Beispiel 3: Polymerzubereitung

Eine Dispersion der Partikel aus Beispiel 2-E1 in PMMA-Lack wird durch Mischen hergestellt, auf Glassubstrate aufgetragen und getrocknet. Der ZnO-Anteil nach dem Trocknen liegt bei 10 Gew.-%. Die Filme zeigen eine kaum wahrnehmbare Trübung. Messungen mit einem UV-VIS-Spektrometer bestätigen diesen Eindruck. Die Probe zeigt abhängig von der Schichtdicke folgende Absorptionswerte (angegeben ist der Prozentsatz des eingestrahlten Lichtes der in Transmission verloren geht)

| Schichtdicke | UV-A (350nm) | VIS (400 nm) |
|---|---|---|
| 1,2µm | 35% | 4% |
| 1,6µm | 40% | 5% |
| 2,2µm | 45% | 7% |

### Vergleich:

| (ZnO (reinst., Fa. Merck) in PMMA-Lack wie oben) | | |
|---|---|---|
| 2µm | 64% | 46% |

## Patentansprüche

1. Polymermodifizierte Nanopartikel geeignet als UV-Stabilisatoren in Polymeren, **dadurch gekennzeichnet, dass** sie erhältlich sind durch ein Verfahren, bei dem in einem Schritt a) eine inverse Emulsion, enthaltend einen oder mehrere wasserlösliche Precursoren für die Nanopartikel oder eine Schmelze, mit Hilfe eines statistischen Copolymeren aus mindestens einem Monomer mit hydrophoben Resten und mindestens einem Monomer mit hydrophilen Resten hergestellt wird, wobei in dem statistischen Copolymeren das Gewichtsverhältnis von Struktureinheiten mit hydrophoben Resten zu Struktureinheiten mit hydrophilen Resten im Bereich 1;2 bis 500:1 liegt und das gewichtsmittlere Molgewicht der statistischen Copolymere im Bereich von M_{w} = 1000 bis 1 000 000 g/mol liegt und in einem Schritt b) Partikel erzeugt werden.

2. Nanopartikel nach Anspruch 1, **dadurch gekennzeichnet, dass** die Partikel im wesentlichen aus Oxiden bzw. Hydroxiden von Silicium-, Cer-, Cobalt-, Chrom-, Nickel-, Zink-, Titan-, Eisen-, Yttrium- und / oder Zirconium bestehen.

3. Nanopartikel nach mindestens einem der vorstehenden Ansprüche, **dadurch gekennzeichnet, dass** die Partikel eine mittlere Teilchengröße bestimmt mittels dynamischer Lichtstreuung bzw. Transmisionselektronenmikroskop von 3 bis 200 nm, vorzugsweise von 20 bis 80 nm, und ganz besonders bevorzugt von 30 bis 50 nm aufweisen und die Teilchengrößenverteilung vorzugsweise eng ist.

4. Nanopartikel nach mindestens einem der vorstehenden Ansprüche, **dadurch gekennzeichnet, dass** das Absorptionsmaximum im Bereich 300 - 500 nm, vorzugsweise im Bereich bis 400 nm liegt.

5. Verfahren zur Herstellung polymermodifizierter Nanopartikel, **dadurch gekennzeichnet, dass** in einem Schritt a) eine inverse Emulsion, enthaltend einen oder mehrere wasserlösliche Precursoren für die Nanopartikel oder eine Schmelze, mit Hilfe eines statistischen Copolymeren aus mindestens einem Monomer mit hydrophoben Resten und mindestens einem Monomer mit hydrophilen Resten hergestellt wird, wobei in dem statistischen Copolymeren das Gewichtsverhältnis von Struktureinheiten mit hydrophoben Resten zu Struktureinheiten mit hydrophilen Resten im Bereich 1:2 bis 500:1 liegt und das gewichtsmittlere Molgewicht der statistischen Copolymere im Bereich von M_{w} = 1000 bis 1 000 000 g/mol liegt und in einem Schritt b) Partikel erzeugt werden.

6. Verfahren nach Anspruch 5, **dadurch gekennzeichnet, dass** die Erzeugung von Partikeln im Schritt b) durch Umsetzung der Precursoren oder durch Abkühlen der Schmelze erfolgt.

7. Verfahren nach Anspruch 6, **dadurch gekennzeichnet, dass** die Precursoren mit einer Säure, einer Lauge, einem Reduktions- oder Oxidationsmittel umgesetzt werden.

8. Verfahren nach mindestens einem der vorstehenden Ansprüche, **dadurch gekennzeichnet, dass** die Tröpfchengröße in der Emulsion im Bereich von 5 bis 500 nm, vorzugsweise im Bereich von 10 bis 200 nm liegt.

9. Verfahren nach mindestens einem der vorstehenden Ansprüche, **dadurch gekennzeichnet, dass** im Schritt b) eine zweite Emulsion, in der ein Reaktionspartner für die Precursoren emulgiert vorliegt, mit der Precursor-Emulsion aus Schritt a) vermischt wird.

10. Verfahren nach Anspruch 9, **dadurch gekennzeichnet, dass** die beiden Emulsionen durch Ultraschalleinwirkung miteinander vermischt werden.

11. Verfahren nach mindestens einem der vorstehenden Ansprüche, **dadurch gekennzeichnet, dass** die ein oder mehreren Precursoren ausgewählt werden aus wasserlöslichen Metall-Verbindungen, vorzugsweise Silicium-, Cer-, Cobalt-, Chrom-, Nickel-, Zink-, Titan-, Eisen-, Yttrium- oder Zirconium-Verbindungen und die Precursoren vorzugsweise mit einer Säure oder Lauge umgesetzt werden.

12. Verfahren nach mindestens einem der vorstehenden Ansprüche, **dadurch gekennzeichnet, dass** ein Coemulgator, vorzugsweise ein nicht-ionisches Tensid eingesetzt wird.

13. Verfahren nach mindestens einem der vorstehenden Ansprüche, **dadurch gekennzeichnet, dass** die Copolymere der Formel 1 entsprechen, wobei 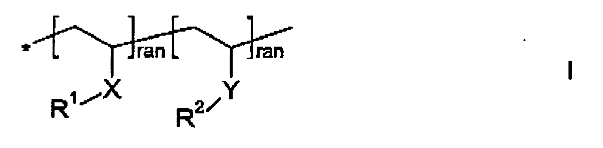
X und Y den Resten üblicher nichtionischer oder ionischer Monomere entsprechen und
R¹ steht für Wasserstoff oder eine hydrophobe Seitengruppe, vorzugsweise ausgewählt aus den verzweigten oder unverzweigten Alkylresten mit mindestens 4 Kohlenstoffatomen, bei denen ein oder mehrere, vorzugsweise alle H-Atome durch Fluor-Atome ersetzt sein können, und
R² steht für eine hydrophile Seitengruppe, die vorzugsweise einen Phosphonat- , Sulfonat-, Polyol- oder Polyether-Rest aufweist,
und wobei innerhalb eines Moleküls -X-R¹ und -Y-R² jeweils mehrere verschiedene Bedeutungen haben können.

14. Verfahren nach Anspruch 13, **dadurch gekennzeichnet, dass** X und Y unabhängig voneinander stehen für -O-, -C(=O)-O-, -C(=O)-NH-, -(CH₂)ₙ-, Phenylen oder Pyridiyl.

15. Verfahren nach mindestens einem der vorstehenden Ansprüche, **dadurch gekennzeichnet, dass** mindestens eine Struktureinheit mindestens ein quarternäres Stickstoffatom enthält, wobei R² vorzugsweise steht für eine Seitengruppe -(CH₂)ₘ-(N⁺(CH₃)₂)-(CH₂)ₙ-SO₃⁻ oder eine Seitengruppe -(CH₂)ₘ-(N⁺(CH₃)₂)-(CH₂)ₙ-PO₃²⁻, wobei m steht für eine ganze Zahl aus dem Bereich von 1 bis 30, vorzugsweise aus dem Bereich 1 bis 6, insbesondere bevorzugt 2, und n steht für eine ganze Zahl aus dem Bereich von 1 bis 30, vorzugsweise aus dem Bereich 1 bis 8, insbesondere bevorzugt 3.

16. Verfahren nach mindestens einem der vorstehenden Ansprüche, **dadurch gekennzeichnet, dass** mindestens eine Struktureinheit ein Oligo- oder Polymer, vorzugsweise ein Makromonomer ist, wobei Polyether, Polyolefine und Polyacrylate als Makromonomere insbesondere bevorzugt sind.

17. Verwendung von Nanopartikeln nach mindestens einem der Ansprüche 1 bis 4 zur UV-Stabilisierung von Polymeren.

18. UV-stabilisierte Polymerzubereitung im wesentlichen bestehend aus mindestens einem Polymeren, **dadurch gekennzeichnet, dass** das Polymere Nanopartikel nach mindestens einem der Ansprüche 1 bis 4 enthält.

19. Polymer nach Anspruch 18, **dadurch gekennzeichnet, dass** es sich bei den Polymeren um Polycarbonat (PC), Polyethylenterephthalat (PETP), Polyimid (PI), Polystyrol (PS). Polymethylmethacrylat (PMMA) oder um Copolymere, die mindestens einen Anteil eines der genannten Polymere enthalten.

20. Verfahren zur Herstellung UV-stabilisierter Polymerzubereitungen, **dadurch gekennzeichnet, dass** das Polymermaterial mit Nanopartikeln gemäß mindestens einem der Ansprüche 1 bis 4, vorzugsweise in einem Extruder oder einem Kneter, vermischt wird.

## Claims

1. Polymer-modified nanoparticles which are suitable as UV stabilisers in polymers, **characterised in that** they are obtainable by a process in which, in a step a), an inverse emulsion comprising one or more water-soluble precursors of the nanoparticles or a melt is prepared with the aid of a random copolymer of at least one monomer containing hydrophobic radicals and at least one monomer containing hydrophilic radicals, where the weight ratio of structural units containing hydrophobic radicals to structural units containing hydrophilic radicals in the random copolymer is in the range 1:2 to 500:1 and the weight average molecular weight of the random copolymers is in the range from M_{w} = 1000 to 1,000,000 g/mol, and, in a step b), particles are produced.

2. Nanoparticles according to Claim 1, **characterised in that** the particles essentially consist of oxides or hydroxides of silicon, cerium, cobalt, chromium, nickel, zinc, titanium, iron, yttrium and/or zirconium.

3. Nanoparticles according to at least one of the preceding claims, **characterised in that** the particles have a mean particle size, determined by means of dynamic light scattering or transmission electron microscope, of 3 to 200 nm, preferably 20 to 80 nm, and very particularly preferably 30 to 50 nm, and the particle-size distribution is preferably narrow.

4. Nanoparticles according to at least one of the preceding claims, **characterised in that** the absorption maximum is in the range 300 - 500 nm, preferably in the range up to 400 nm.

5. Process for the production of polymer-modified nanoparticles, **characterised in that**, in a step a), an inverse emulsion comprising one or more water-soluble precursors of the nanoparticles or a melt is prepared with the aid of a random copolymer of at least one monomer containing hydrophobic radicals and at least one monomer containing hydrophilic radicals, where the weight ratio of structural units containing hydrophobic radicals to structural units containing hydrophilic radicals in the random copolymer is in the range 1:2 to 500:1 and the weight average molecular weight of the random copolymers is in the range from M_{w} = 1000 to 1,000,000 g/mol, and, in a step b), particles are produced.

6. Process according to Claim 5, **characterised in that** particles are produced in step b) by reaction of the precursors or by cooling of the melt.

7. Process according to Claim 6, **characterised in that** the precursors are reacted with an acid, a lye, a reducing agent or an oxidant.

8. Process according to at least one of the preceding claims, **characterised in that** the droplet size in the emulsion is in the range from 5 to 500 nm, preferably in the range from 10 to 200 nm.

9. Process according to at least one of the preceding claims, **characterised in that** a second emulsion in which a reactant for the precursors is in emulsified form is mixed in step b) with the precursor emulsion from step a).

10. Process according to Claim 9, **characterised in that** the two emulsions are mixed with one another by the action of ultrasound.

11. Process according to at least one of the preceding claims, **characterised in that** the one or more precursors are selected from water-soluble metal compounds, preferably silicon, cerium, cobalt, chromium, nickel, zinc, titanium, iron, yttrium or zirconium compounds, and the precursors are preferably reacted with an acid or lye.

12. Process according to at least one of the preceding claims, **characterised in that** a coemulsifier, preferably a nonionic surfactant, is employed.

13. Process according to at least one of the preceding claims, **characterised in that** the copolymers conform to the formula I 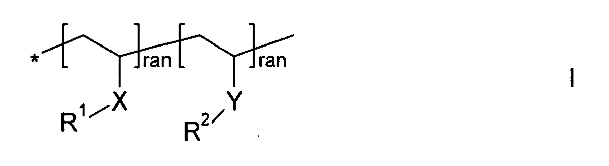 where
X and Y correspond to the radicals of conventional nonionic or ionic monomers, and
R¹ stands for hydrogen or a hydrophobic side group, preferably selected from branched or unbranched alkyl radicals having at least 4 carbon atoms, in which one or more, preferably all, H atoms may have been replaced by fluorine atoms, and
R² stands for a hydrophilic side group, which preferably has a phosphonate, sulfonate, polyol or polyether radical,
and where -X-R¹ and -Y-R² may each have a plurality of different meanings within a molecule.

14. Process according to Claim 13, **characterised in that** X and Y, independently of one another, stand for -O-, -C(=O)-O-, -C(=O)-NH-, -(CH₂)ₙ-, phenylene or pyridyl.

15. Process according to at least one of the preceding claims, **characterised in that** at least one structural unit contains at least one quaternary nitrogen atom, where R² preferably stands for a -(CH₂)ₘ-(N⁺(CH₃)₂)-(CH₂)ₙ-SO₃- side group or a -(CH₂)ₘ-(N⁺(CH₃)₂)-(CH₂)ₙ-PO₃²⁻ side group, where m stands for an integer from the range from 1 to 30, preferably from the range 1 to 6, particularly preferably 2, and n stands for an integer from the range from 1 to 30, preferably from the range 1 to 8, particularly preferably 3.

16. Process according to at least one of the preceding claims, **characterised in that** at least one structural unit is an oligomer or polymer, preferably a macromonomer, where polyethers, polyolefins and polyacrylates are particularly preferred as macromonomers.

17. Use of nanoparticles according to at least one of Claims 1 to 4 for the UV stabilisation of polymers.

18. UV-stabilised polymer composition essentially consisting of at least one polymer, **characterised in that** the polymer comprises nanoparticles according to at least one of Claims 1 to 4.

19. Polymer according to Claim 18, **characterised in that** the polymer is polycarbonate (PC), polyethylene terephthalate (PETP), polyimide (PI), polystyrene (PS), polymethyl methacrylate (PMMA) or a copolymer having at least a fraction of one of the said polymers.

20. Process for the preparation of UV-stabilised polymer compositions, **characterised in that** the polymer material is mixed with nanoparticles according to at least one of Claims 1 to 4, preferably in an extruder or compounder.

## Revendications

1. Nanoparticules modifiées par polymère qui conviennent en tant que stabiliseurs UV dans des polymères, **caractérisées en ce qu'**elles peuvent être obtenues au moyen d'un procédé selon lequel, au niveau d'une étape a), une émulsion inverse comprenant un ou plusieurs précurseurs solubles à l'eau des nanoparticules ou un bain de fusion est préparée à l'aide d'un copolymère statistique d'au moins un monomère contenant des radicaux hydrophobes et d'au moins un monomère contenant des radicaux hydrophiles, où le rapport en poids d'unités structurelles contenant des radicaux hydrophobes sur des unités structurelles contenant des radicaux hydrophiles dans le copolymère statistique est dans la plage de 1:2 à 500:1 et le poids moléculaire moyen en poids des copolymères statistiques est dans la plage de M_{w} = 1 000 à 1 000 000 g/mol et au niveau d'une étape b), des particules sont produites.

2. Nanoparticules selon la revendication 1, **caractérisées en ce que** les particules sont constituées essentiellement par des oxydes ou des hydroxydes de silicium, cérium, cobalt, chrome, nickel, zinc, titane, fer, yttrium et/ou zirconium.

3. Nanoparticules selon au moins l'une des revendications précédentes, **caractérisées en ce que** les particules présentent une dimension de particule moyenne, déterminée au moyen d'un microscope à diffusion de lumière dynamique ou électronique à transmission, de 3 à 200 nm, de préférence de 20 à 80 nm et de façon très particulièrement préférable, de 30 à 50 nm, et la distribution des dimensions des particules est de préférence étroite.

4. Nanoparticules selon au moins l'une des revendications précédentes, **caractérisées en ce que** le maximum d'absorption est dans la plage de 300-500 nm, de préférence dans la plage allant jusqu'à 400 nm.

5. Procédé pour la production de nanoparticules modifiées par polymère, **caractérisé en ce que**, au niveau d'une étape a), une émulsion inverse comprenant un ou plusieurs précurseurs solubles à l'eau des nanoparticules ou un bain de fusion est préparée à l'aide d'un copolymère statistique d'au moins un monomère contenant des radicaux hydrophobes et d'au moins un monomère contenant des radicaux hydrophiles, où le rapport en poids d'unités structurelles contenant des radicaux hydrophobes sur des unités structurelles contenant des radicaux hydrophiles dans le copolymère statistique est dans la plage de 1:2 à 500:1 et le poids moléculaire moyen en poids des copolymères statistiques est dans la plage de M_{w} = 1000 à 1 000 000 g/mol et au niveau d'une étape b), des particules sont produites.

6. Procédé selon la revendication 5, **caractérisé en ce que** les particules sont produites au niveau de l'étape b) par réaction des précurseurs ou par refroidissement du bain de fusion.

7. Procédé selon la revendication 6, **caractérisé en ce que** les précurseurs sont amenés à réagir avec un acide, une lessive, un agent réducteur ou un oxydant.

8. Procédé selon au moins l'une des revendications précédentes, **caractérisé en ce que** la dimension de gouttelettes dans l'émulsion est dans la plage de 5 à 500 nm, de préférence dans la plage de 10 à 200 nm.

9. Procédé selon au moins l'une des revendications précédentes, **caractérisé en ce qu'**une seconde émulsion dans laquelle un réactant pour les précurseurs est selon une forme émulsifiée est mélangée au niveau de l'étape b) avec l'émulsion de précurseur issue de l'étape a).

10. Procédé selon la revendication 9, **caractérisé en ce que** les deux émulsions sont mélangées l'une avec l'autre au moyen de l'action d'ultrasons.

11. Procédé selon au moins l'une des revendications précédentes, **caractérisé en ce que** les un ou plusieurs précurseurs sont choisis parmi des composés métalliques solubles à l'eau, de préférence des composés de silicium, cérium, cobalt, chrome, nickel, zinc, titane, fer, yttrium ou zirconium, et les précurseurs sont de préférence amenés à réagir avec un acide ou une lessive.

12. Procédé selon au moins l'une des revendications précédentes, **caractérisé en ce qu'**un co-émulsifieur, de préférence un surfactant non ionique, est utilisé.

13. Procédé selon au moins l'une des revendications précédentes, **caractérisé en ce que** les copolymères sont conformes à la formule I 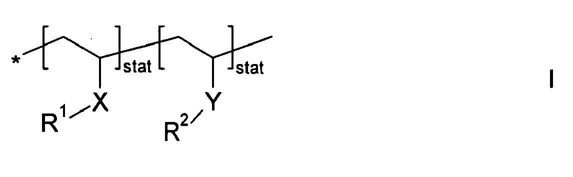 où
X et Y correspondent aux radicaux de monomères non ioniques ou ioniques classiques ; et
R¹ représente hydrogène ou un groupe latéral hydrophobe, de préférence choisi parmi des radicaux alkyle ramifiés ou non ramifiés comportant au moins quatre atomes de carbone, où un ou plusieurs, de préférence tous, les atomes de H peuvent avoir été remplacés par des atomes de fluor ; et
R² représente un groupe latéral hydrophile, lequel comporte de préférence un radical phosphonate, sulfonate, polyol ou polyéther,
et où -X-R¹ et -Y-R² peuvent chacun présenter une pluralité de significations différentes à l'intérieur d'une molécule.

14. Procédé selon la revendication 13, **caractérisé en ce que** X et Y, indépendamment l'un de l'autre, représentent -O-, -C(=O)-O-, -C(=O)-NH-, -(CH₂)ₙ-, phénylène ou pyridyle.

15. Procédé selon au moins l'une des revendications précédentes, **caractérisé en ce qu'**au moins une unité structurelle contient au moins un atome d'azote quaternaire, où R² représente de préférence un groupe latéral -(CH₂)ₘ-(N⁺(CH₃)₂)-(CH₂)ₙ-SO₃⁻ ou un groupe latéral -(CH₂)ₘ-(N⁺(CH₃)₂)-(CH₂)ₙ-PO₃²⁻, où m représente un entier dans la plage de 1 à 30, de préférence dans la plage de 1 à 6, de façon particulièrement préférable, 2 et n représente un entier dans la plage de 1 à 30, de préférence dans la plage de 1 à 8, de façon particulièrement préférable, 3.

16. Procédé selon au moins l'une des revendications précédentes, **caractérisé en ce qu'**au moins une unité structurelle est un oligomère ou un polymère, de préférence un macromonomère, où des polyéthers, des polyoléfines et des polyacrylates ont particulièrement la préférence en tant que macromonomères.

17. Utilisation de nanoparticules selon au moins l'une des revendications 1 à 4 pour la stabilisation UV de polymères.

18. Composition de polymères stabilisés UV constituée essentiellement par au moins un polymère, **caractérisée en ce que** le polymère comprend des nanoparticules selon au moins l'une des revendications 1 à 4.

19. Polymère selon la revendication 18, **caractérisé en ce que** le polymère est polycarbonate (PC), téréphtalate de polyéthylène (PETP), polyimide (Pl), polystyrène (PS), polyméthylméthacrylate (PMMA) ou un copolymère comportant au moins une fraction de l'un desdits polymères.

20. Procédé pour la préparation de compositions de polymères stabilisés UV, **caractérisé en ce que** le matériau polymérique est mélangé avec des nanoparticules selon au moins l'une des revendications 1 à 4, de préférence dans une extrudeuse ou une boudineuse.
